(19) Europäisches Patentamt
European Patent Office
Office européen des brevets

(11) **EP 4 317 321 A1**

(12) **EUROPEAN PATENT APPLICATION**
published in accordance with Art. 153(4) EPC

(43) Date of publication:
**07.02.2024 Bulletin 2024/06**

(21) Application number: **21933214.5**

(22) Date of filing: **27.10.2021**

(51) International Patent Classification (IPC):
***C08L 83/05*** (2006.01) ***C08L 83/07*** (2006.01)
***C08J 5/18*** (2006.01)

(52) Cooperative Patent Classification (CPC):
**C08J 5/18; C08L 83/04**

(86) International application number:
**PCT/JP2021/039581**

(87) International publication number:
**WO 2022/201616 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.03.2021 JP 2021050088**

(71) Applicant: **ASAHI FR R&D Co., Ltd.**
**Saitama-shi, Saitama 330-0801 (JP)**

(72) Inventors:
- **TAKEOKA, Shinji**
  **Tokyo 169-8050 (JP)**
- **MIHARA, Syo**
  **Saitama-shi, Saitama 330-0801 (JP)**
- **WATANABE, Nobuyoshi**
  **Saitama-shi, Saitama 330-0801 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

# (54) ULTRA-THIN ELASTOMER SHEET AND METHOD FOR PRODUCING SAME

(57) Provided is an ultra-thin elastomer sheet that is composed of silicone, can stand alone, and can be put to practical use.

The ultra-thin elastomer sheet is an ultra-thin sheet, which has a maximum film thickness of 3 μm and is composed of a crosslinked silicone polymer in which a silicone polymer configured from a plurality of unit portions having reactive organic groups and a plurality of unit portions not having reactive organic groups is crosslinked by a crosslinking agent having a reaction group that reacts with the reactive organic groups,
the crosslinked silicone polymer is defined by the following mathematical formula (I)
[mathematical expression 1]

$$U = (Um + Un) / Ua \cdots\cdots (I)$$

where, in mathematical formula (I), U is a number of monomer unit portions between crosslinking points of the crosslinked silicone polymer, Um is a number of monomer unit portions of the silicone polymer that do not have reactive organic groups, Un is a number of monomer unit portions of the silicone polymer that have reactive organic groups, and Ua is a number of reaction groups of the crosslinking agent used in crosslinking and
the number of monomer unit portions between crosslinking points of the crosslinked silicone polymer is 348-2090.

EP 4 317 321 A1

## Description

Technical Field

The present invention relates to an ultra-thin elastomer sheet that can stand alone, and a method for manufacturing the same.

Background Art

Silicone sheets that are composed of polydimethylsiloxane (PDMS) are used in a variety of applications due to their heat resistance, weather resistance, and a stable electrical property and so on. In particular, thin-film silicone sheets having a film thickness of several to several tens μm are expected to be applied as water-insoluble polymer thin-films for medical applications. These thin-film silicone sheets can be obtained experimentally, as proposed in Patent Document 1, by film-producing a silicone polymer which is obtained by reacting PMDS with a curing agent in a mixed solvent of n-hexane and ethyl acetate. However, the resulting thin-film silicone sheets lack standing-alone properties, and hence require special consideration in their handling, making them completely impractical.

[Prior Art Document]

[Patent Document]

[Patent Document 1] WO2017/188214

Summary of the Invention

Problems to be Solved by the Invention

The object of the present invention is to provide an ultra-thin elastomer sheet that is composed of silicone, that can stand alone, and that can be put to practical use, and a method for manufacturing the same.

Means for Solving the Problems

An ultra-thin elastomer sheet according to the present invention for achieving the above objects is an ultra-thin sheet, which has a maximum film thickness of 3 μm and is composed of a crosslinked silicone polymer in which a silicone polymer configured from a plurality of unit portions having reactive organic groups and a plurality of unit portions not having reactive organic groups is crosslinked by a crosslinking agent having reaction groups that react with the reactive organic groups, and the crosslinked silicone polymer is defined by the following mathematical formula (I):
[Mathematical Expression 1]

$$U = (Um + Un) / Ua \cdots (I)$$

where, in mathematical formula (I), U is a number of monomer unit portions between crosslinking points of the crosslinked silicone polymer, Um is a number of monomer unit portions of the silicone polymer that do not have reactive organic groups, Un is a number of monomer unit portions of the silicone polymer that have reactive organic groups, and Ua is a number of reaction groups of the crosslinking agent used in crosslinking, and the number of monomer unit portions between crosslinking points of the crosslinked silicone polymer is 348-2090.

The silicone polymer has preferably the reactive organic groups on side chains of a linear silicone polymer.

The reactive organic groups are preferably vinyl groups.

The silicone polymer is preferably a polydimethylsiloxane polymer represented by the following chemical formula (1):

[Chemical Expression 1]

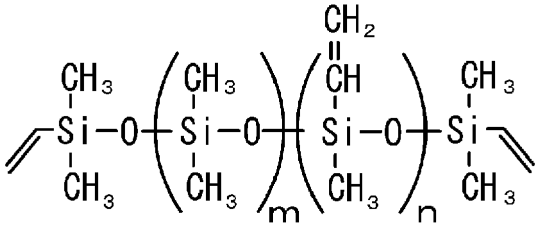

········· (1)

wherein, in the chemical formula (1), m is 5828-10727, and n is 28-274.

The crosslinking agent is preferably a silicone compound which has a lower molecular weight than that of the silicone polymer and further has reaction groups that react with the reactive organic groups.

The crosslinking agent is preferably a linear silicone compound which has a lower molecular weight than that of the silicone polymer and has reaction groups on side chains that react with the reactive organic groups.

The reaction groups of the crosslinking agent are preferably hydrosilyl groups.

The crosslinking agent is preferably a silicone compound represented by the following chemical formula (2):

[Chemical Expression 2]

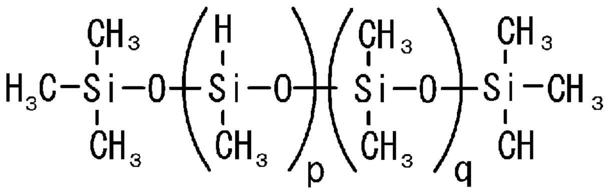

········· (2)

wherein, in the chemical formula (2), p is 6-9, and q is 16-19.

The ultra-thin elastomer sheet has an elongation rate thereof being at least 300%, and this is suitable for medical applications.

A method for manufacturing a thin-film elastomer sheet according to the present invention for achieving the above objects comprises as follows: preparing a silicone polymer configured from a plurality of unit portions having reactive organic groups and a plurality of unit portions not having reactive organic groups, and a crosslinking agent containing units having reaction groups that react with the reactive organic groups so that the number of unit portions that do not react with the reaction groups of the crosslinking agent in the silicone polymer which is defined by the following mathematical formula (II):

[Mathematical Expression II]

$$U' = (U'm + U'n) / U'a \cdots\cdots (II)$$

wherein, in mathematical formula (II), U' is a number of monomer unit portions that do not react with reaction groups of the crosslinking agent in the silicone polymer, U'm is a number of monomer unit portions that do not have reactive organic groups of the silicone polymer, U'n is a number of monomer unit portions that have reactive organic groups of the silicone polymer, and U'a is a number of reaction groups of the crosslinking agent, is 348-2090, then, after dissolving the silicone polymer and the crosslinking agent in a solvent, producing a crosslinked silicone polymer by reacting the reactive organic groups of the silicone polymer with the reaction groups of the crosslinking agent by adding a catalyst, and finally film-producing a thin-film sheet having a maximum film thickness of 3 μm from the crosslinked silicone polymer.

As the silicone polymer, it is preferred to use one having the reactive organic groups on side chains of a linear silicone polymer.

The reactive organic groups are preferably vinyl groups.

As the silicone polymer, it is preferred to use a polydimethylsiloxane polymer represented by the following chemical formula (3):

[Chemical Expression 3]

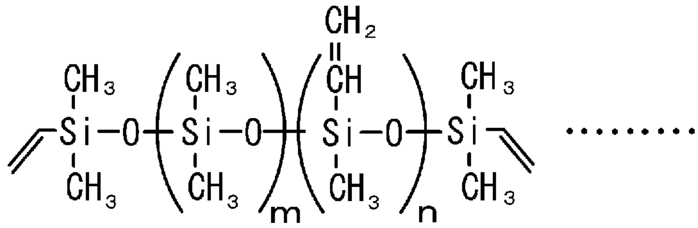

(3)

wherein, in the chemical formula (3), m is 5828-10727, and n is 28-274.

As the crosslinking agent, it is preferred to use a silicone compound which has a lower molecular weight than that of the silicone polymer and further has reaction groups that react with the reactive organic groups.

As the crosslinking agent, it is preferred to use a linear silicone compound which has a lower molecular weight than that of the silicone polymer and has reaction groups on side chains that react with the reactive organic groups.

The reaction groups of the crosslinking agent are preferably hydrosilyl groups.

As the crosslinking agent, it is preferred to use a silicone compound represented by the following chemical formula (4):

[Chemical Expression 4]

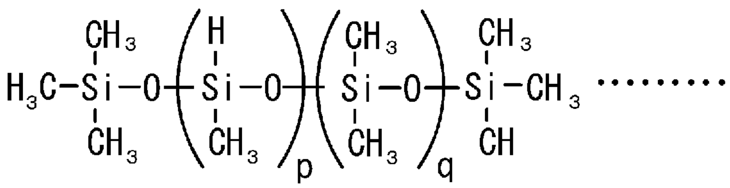

(4)

wherein, in the chemical formula (4), p is 6-9, and q is 16-19.

It is preferable that a thin-film elastomer sheet having a desired thickness can be obtained as follows: a silicone solution in which the silicone polymer, the crosslinking agent, and the catalyst are dissolved in the solvent is applied to a prescribed thickness onto a laminated sacrifice layer on one side of a base film while being heated and cured to form an ultra-thin sheet having a maximum thickness of 3 μm, and then the sacrifice layer is removed to isolate the thin-film sheet from the base film.

Effects of the Invention

Since the thin-film elastomer sheet according to the present invention can possess standing-alone properties with improved strength while retaining high stretchability, it can be put to practical use with improved handleability.

Brief Description of Drawings

[Figure 1]
Fig. 1 is a schematic diagram for explaining a film-producing method to which the present invention is applied.
[Figure 2]
Fig. 2 is a graph showing the relationship between the film thickness of an ultra-thin elastomer sheet according to the present invention and an elongation rate thereof at break.

Embodiments to Implement the Invention

An ultra-thin elastomer sheet according to the present invention has a maximum film thickness of 3 μm, and its constituent polymer is a partially-crosslinking crosslinked polymer. The crosslinked silicone polymer is a silicone polymer configured from a plurality of unit portions having reactive organic groups and a plurality of unit portions not having reactive organic groups crosslinked by a crosslinking agent having reaction groups that react with the reactive

organic groups which is defined by the following mathematical formula (III)
[Mathematical Expression III]

$$U = (Um + Un) / Ua \cdots\cdots (III)$$

wherein, in mathematical formula (III), U is a number of monomer unit portions between crosslinking points of the crosslinked silicone polymer, Um is a number of monomer unit portions of the silicone polymer that do not have reactive organic groups, Un is a number of monomer unit portions of the silicone polymer that have reactive organic groups, and Ua is a number of reaction groups of the crosslinking agent used in crosslinking, and the number of monomer unit portions between crosslinking points of the crosslinked silicone polymer is 348-2090, preferably 1045-2090.

Herein, if the number of monomer unit portions between crosslinking points of the crosslinked silicone polymer exceeds 2090, the strength of the ultra-thin elastomer sheet is insufficient. On the other hand, if the number of monomer unit portions between crosslinking points of the crosslinked silicone polymer is less than 348, the stretchability of the ultra-thin elastomer sheet is insufficient.

As a silicone polymer configured from a plurality of unit portions having reactive organic groups and a plurality of unit portions not having reactive organic groups that constitute the crosslinked silicone polymer, one having reactive organic groups on side chains of a linear silicone polymer is preferred, and the reactive organic groups are preferably vinyl groups. In particular, a polydimethylsiloxane polymer represented by the following chemical formula (5) is preferred:

[Chemical Expression 5]

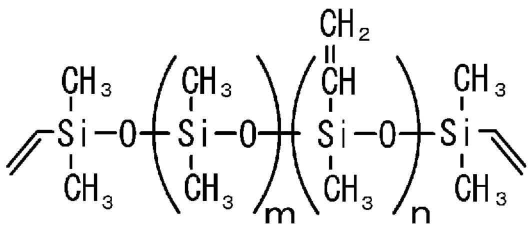
·········· (5)

wherein, in the chemical formula (5), m is 5828-10727, and n is 28-274. Specifically, the silicone gum material 110S-7S available from Dongiue Silicone Co., Ltd. is suitable.
Here, for the linear silicone polymer represented by the chemical formula (5), the dimethylsiloxane unit portion as a monomer unit portion not having reactive organic groups and the vinylmethylsiloxane unit portion as a monomer unit portion having reactive organic groups may be block-shaped or random-shaped.

As a crosslinking agent having reaction groups that react with the reactive organic groups of the silicone polymer, it may include an organic peroxide crosslinking agent and an addition-reaction-type crosslinking agent containing hydroxysilyls. The use of the addition-reaction-type crosslinking agent can reduce the reaction time with the silicone polymer.

As a crosslinking agent, a silicone compound which has a lower molecular weight than that of the silicone polymer and further has reaction groups that react with the reactive organic groups of the silicone polymer is preferred, and a linear silicone compound which has a lower molecular weight than that of the silicone polymer and also has reaction groups on side chains that react with the reactive organic groups of silicone is more preferred. Preferably, the reaction groups are hydrosilyl groups. In particular, the silicone compound represented by the following chemical formula (6) is preferred:

[Chemical Expression 6]

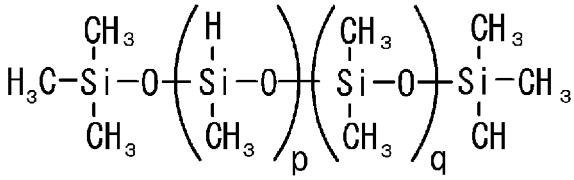
·········· (6)

wherein, in the chemical formula (6), p is 6-9, and q is 16-19. Specifically, HMS-301 available from Gelest Inc. can be used suitably.

Here, for the silicone compound represented by the chemical formula (6), the dimethylsiloxane unit portion as a monomer unit portion not having reaction groups and the hydroxysiloxane unit portion as a monomer unit portion having reaction groups may be block-shaped or random-shaped.

The thin-film elastomer sheet composed of the crosslinked silicone polymer that is composed of the silicone polymer and the crosslinking agent has a maximum film thickness of 3 μm, preferably 0.1-1 μm. Since the thin-film elastomer sheet of the present invention is composed of the crosslinked silicone polymer in which the silicone polymer is partially crosslinked, it can be put to standing-alone properties with improved strength while retaining high stretchability. For the thin-film elastomer sheet of the present invention, the thinner the film thickness, the lower the elongation rate thereof, and the thin-film elastomer sheet with a film thickness of 0.2 μm can exhibit elongation of over 150%.

The thin-film elastomer sheet according to the present invention can be obtained as follows: the silicone polymer configured from the plurality of unit portions having reactive organic groups and the plurality of unit portions not having reactive organic groups and the crosslinking agent containing units having reaction groups that react with the reactive organic groups are dissolved in a solvent, and subsequently the reaction of the reactive organic groups of the silicone polymer with the reaction groups of the crosslinking agent by adding a catalyst gives the crosslinked silicone polymer, which is subject to film-production.

In this case, the blending amounts of the silicone polymer and the crosslinking agent are adjusted so that the number of unit portions U' that do not react with reaction groups of the crosslinking agent in the silicone polymer which is defined by the following mathematical formula (IV) is 340-2090, preferably 1045-2090:

[Mathematical Expression IV]

$$U' = (U'm + U'n) / U'a \cdots\cdots (IV)$$

wherein, in mathematical formula (IV), U'm is a number of monomer unit portions that do not have reactive organic groups of the silicone polymer, U'n is a number of monomer unit portions that have reactive organic groups of the silicone polymer, and U'a is a number of reaction groups of the crosslinking agent.

Herein, when U' exceeds 2090, the strength of the resulting ultra-thin elastomer sheet is insufficient. On the other hand, when U' is less than 340, the stretchability of the resulting ultra-thin elastomer sheet is insufficient.

The solvents for dissolving the silicone polymer and the crosslinking agent include hexane, toluene, tetrahydrofuran, ethyl acetate, or the like, and these may be mixed.

As the catalyst, when using an addition-reaction-type crosslinking agent, the catalyst containing platinum can be used, but the catalyst in which platinum is chelated with an organic substance is preferable for adjusting the curing temperature. For example, the chelated one with cyclovinylmethylsiloxane, divinyltetramethyldisiloxane, or carbonylcyclovinylmethylsiloxane can be used. Specifically, the platinum catalyst (SIP 6832.2) available from Gelest Inc. can be used.

Thus, the thin-film elastomer sheet having the maximum film thickness of 3 μm can be obtained as follows: the silicone solution in which, before addition of the catalyst, the silicone polymer and the crosslinking agent are dissolved is applied to a prescribed thickness onto the laminated sacrifice layer on one side of the base film while being heated and cured to form the ultra-thin sheet having the maximum thickness of 3 μm, and then the sacrifice layer is removed to isolate the thin-film sheet from the base film. As the base film, by using the film that is composed of a water-insoluble polymer such as polyethylene terephthalate and by forming the sacrifice layer that is composed of the water-soluble polymer such as polyvinyl alcohol, it can be easily isolated by immersing the thin-film sheet formed on the sacrifice layer on one side of the base film in warm water to dissolve the sacrifice layer.

The film-production can be performed continuously by using a microgravure coater as shown in Fig. 1. The microgravure coater shown in Fig. 1 is composed of a gravure roll 10 which is rotationally driven, a transfer roller 12 which is settled above the gravure roll 10 and to which a transfer film 16 is supplied, a container P in which the silicone polymer dissolved in a solvent and a silicone solution S containing the crosslinking agent and the catalyst are stored, and a blade 14 for scraping off the excess from the deposited layer of the silicone solution S attached to the surface of the gravure roll 10 from the portion of the container P immersed in the silicone solution S. The transfer film 16 shown in Fig. 1, just as shown in the partially enlarged Figure, is laminated with the sacrifice layer 16b composed of polyvinyl alcohol on one side of the base film 16a composed of polyethylene terephthalate.

The film-production using the microgravure coater shown in Fig. 1 is performed as follows: a part of the gravure roll 10 is rotated at a predetermined rotation speed while being immersed in the silicone solution S in the container P, and the silicone solution S is applied onto the sacrifice layer 16b of the transfer film 16 which is supplied to the transfer roller 12 while scraping off the excess of the silicone solution S adhering to the surface with the blade 14. The transfer film 16 applied with the thin-film sheet, as shown in the partially enlarged Figure, has a thin-film sheet 18 composed of the crosslinked silicone polymer laminated on the sacrifice layer 16b of the transfer film 16. The thin-film sheet 18 in such a state contains a solvent, and the transfer film 16 to which the thin-film sheet 18 is attached is conveyed to a heat

drying process, and the thin-film sheet 18 is dried and cured at a temperature of 100-130 °C, preferably 110-120 °C. Next, the transfer film 16 in which the thin-film sheet 18 is attached to the base film 16a via the sacrifice layer 16b is immersed in warm water, and the sacrifice layer 16b is dissolved to isolate the thin-film sheet 18 from the base film 16a, and thus an ultra-thin elastomer sheet can be obtained.

Embodiments

Hereunder, the following details the examples of the present invention, but the scope of the present invention is not limited to these examples.

(Example 1)

An ultra-thin elastomer sheet that is composed of a crosslinked silicone polymer having number of monomer unit portions U between crosslinking points of a crosslinked silicone polymer being 2090 of the above mathematical formula (I), was prepared.
In this case, blending amounts of a silicone gum material 110S-7S available from Dongiue Silicone Co., Ltd. (molecular weight 450000-600000, m=5828-7771, n=205-274) as a raw material silicone polymer and HMS-301 available from Gelest Inc. (molecular weight 1900-2000, p=6-9, q=16-19) as a crosslinking agent were adjusted so that U' in mathematical formula (II) (a number of unit portions that do not react with reaction groups of the crosslinking agent in the silicone polymer) was 2090.
Here, in mathematical formula (II), U'm (a number of monomer unit portions of the silicone polymer that do not have reactive organic groups) was 6800, U'n (a number of monomer unit portions of the silicone polymer that have reactive organic groups) was 240, and U'a (a number of reaction groups of the crosslinking agent) was 7.

(Example 1-1)

(Preparation of silicone solution)

To a mixed solvent of 40 mL of n-hexane and 10 mL of ethyl acetate were added 1.76 g of the silicone gum material 110S-7S available from Dongiue Silicone Co., Ltd. (hereinafter, simply referred to as the silicone gum material 110S-7S) as a raw material silicone polymer, and 3.27 mg of HMS-301 available from Gelest Inc. (hereinafter, simply referred to as HMS-301), and the mixture was stirred at room temperature overnight to give the 5 mass% silicone solution.

(Film production)

1. Preparation of transfer film 16

To one side of the polyethylene terephthalate film (Lumirror (registered trademark) 25T60) available from TORAY Industries, Inc. as a base film 16a shown in Fig. 1 was applied a polyvinyl alcohol aqueous solution to form the sacrifice layer 16b. This transfer film 16 was performed by using a microgravure coater shown in Fig.1. In this case, a 10 mass% polyvinyl alcohol aqueous solution was stored in the container P, the heating temperature of a gravure roll 10 was set to 120 °C, and the rotation speed was set to 30 rpm. Also, the feeding speed of the polyethylene terephthalate film was set to 0.2 m/min.

2. Film production

To the container P shown in Fig. 1 for storing the resulting silicone solution was diluted the platinum catalyst (SIP6832.2) available from Gelest Inc. 100 times with n-hexane, and 66.5 μL of this was added. Immediately, by using a microgravure coater shown in Fig.1, the thin-film sheet 18 composed of a crosslinked silicone polymer was laminated on the sacrifice layer 16b of the transfer film 16. In this case, the heating temperature of the gravure roll 10 was set to 120 °C, and the rotation speed was set to 30 rpm. Also, the feeding speed of the transfer film 16 was set to 0.2 m/min.
3. Measurement of film thickness of thin-film elastomer sheet

(Thin-film elastomer sheet peeling)

A 20 mm x 20 mm square was cut out from the center of a 40 mm x 40 mm square cut out from the carrier film (HUCB 100A (product name)) available from PANAC Co., Ltd. to create a frame-shaped plastic frame. After attaching the plastic frame to the thin-film sheet 18 on the sacrifice layer 16b of the transfer film 16 followed by peeling, the sacrifice

layer 16b and the thin-film sheet 18 are peeled off from the base film 16a together with the plastic frame. Next, the sacrifice layer 16b and the thin-film sheet 18 together with the plastic frame were immersed in warm water of 40-50 °C for 30 min, and the thin-film sheet 18 was isolated by dissolving the sacrifice layer 16b to give the thin-film elastomer sheet.

(Measurement of film thickness)

After the resulting thin-film elastomer sheet was attached on a silicone wafer and dried at room temperature for one hour, the thickness of the thin-film elastomer sheet at three points was measured with a stylus-type thin-film profilometer (Dektak-XT (product name) available from Bruker Japan Co., Ltd.), and the average value of the obtained measurements was taken as the film thickness of the thin-film elastomer sheet. The film thickness of the thin-film elastomer sheet obtained in this example was 0.093 μm.

(Example 1-2 to Example 1-6)

In Example 1-1, except for changing the blending amounts of the silicone gum material 110S-7S and the crosslinking agent HMS-301 as shown in Table 1 so that U' in mathematical formula (II) was 2090 to prepare the silicone solution with a silicone concentration shown in Table 1, and further changing the addition amount of the platinum catalyst solution of the platinum catalyst (SIP6832.2) available from Gelest Inc. diluted 100 times with n-hexane as shown in Table 1, a thin-film elastomer sheet was obtained by film-producing in the same manner as in Example 1-1. The film thickness of the resulting thin-film elastomer sheet was measured in the same manner as in Example 1-1, and the results are shown in Table 1.

[Table 1]

| | 110S-7 | HMS-301 | Silicone concentratio n | Platinum catalyst solution | Film thickness |
|---|---|---|---|---|---|
| Example 1-2 | 2.11 g | 3.92 mg | 6 mass% | 79.8 μL | 0.148 μm |
| Example 1-3 | 2.46 | 4.58 | 7 | 93.1 | 0.549 |
| Example 1-4 | 2.82 | 5.23 | 8 | 106.4 | 0.959 |
| Example 1-5 | 3.17 | 5.89 | 9 | 119.7 | 1.661 |
| Example 1-6 | 3.52 | 6.53 | 10 | 133.0 | 2.102 |

(Example 2)

By using the silicone gum material 110S-7S, the crosslinking agent HMS-301, and the platinum catalyst solution of the platinum catalyst (SIP6832.2) available from Gelest Inc. diluted 100 times with n-hexane used in Example 1, an ultra-thin elastomer sheet that was composed of the crosslinked silicone polymer having the number of monomer unit portions U between crosslinking points being 1045 in mathematical formula (I) was prepared.

(Example 2-1 to Example 2-6)

In Example 1, except for changing the blending amounts of the silicone gum material 110S-7S, the crosslinking agent HMS-301, and the platinum catalyst solution as shown in Table 2 so that U' in mathematical formula (II) was 1045, a thin-film elastomer sheet was obtained by film-producing in the same manner as in Example 1. The film thickness of the resulting thin-film elastomer sheet was measured in the same manner as in Example 1, and the results are shown in Table 2.

[Table 2]

| | 110S-7 | HMS-301 | Platinum catalyst solution | Film thickness |
|---|---|---|---|---|
| Example 2-1 | 1.76 g | 6.54 mg | 66.5 μL | 0.185 μm |
| Example 2-2 | 2.11 | 7.84 | 79.8 | 0.551 |
| Example 2-3 | 2.46 | 9.16 | 93.1 | 0.721 |
| Example 2-4 | 2.82 | 10.46 | 106.4 | 1.021 |
| Example 2-5 | 3.17 | 11.78 | 119.7 | 1.534 |

(continued)

| | 110S-7 | HMS-301 | Platinum catalyst solution | Film thickness |
|---|---|---|---|---|
| Example 2-6 | 3.52 | 13.06 | 133.0 | 2.111 |

(Example 3)

By using the silicone gum material 110S-7S, the crosslinking agent HMS-301, and the platinum catalyst solution of the platinum catalyst (SIP6832.2) available from Gelest Inc. diluted 100 times with n-hexane used in Example 1, an ultra-thin elastomer sheet that was composed of the crosslinked silicone polymer having the number of monomer unit portions U between crosslinking points being 523 in mathematical formula (I) was prepared.

(Example 3-1 to Example 3-6)

In Example 1, except for changing the blending amounts of the silicone gum material 110S-7S, the crosslinking agent HMS-301, and the platinum catalyst solution as shown in Table 3 so that U' in mathematical formula (II) was 523, a thin-film elastomer sheet was obtained by film-producing in the same manner as in Example 1. The film thickness of the resulting thin-film elastomer sheet was measured in the same manner as in Example 1, and the results are shown in Table 3.

[Table 3]

| | 110S-7 | HMS-301 | Platinum catalyst solution | Film thickness |
|---|---|---|---|---|
| Example 3-1 | 1.76 g | 6.54 mg | 66.5 μL | 0.180 μm |
| Example 3-2 | 2.11 | 7.84 | 79.8 | 0.655 |
| Example 3-3 | 2.46 | 9.16 | 93.1 | 0.719 |
| Example 3-4 | 2.82 | 10.46 | 106.4 | 0.904 |
| Example 3-5 | 3.17 | 11.78 | 119.7 | 1.386 |
| Example 3-6 | 3.52 | 13.06 | 133.0 | 2.588 |

(Example 4)

By using the silicone gum material 110S-7S, the crosslinking agent HMS-301, and the platinum catalyst solution of the platinum catalyst (SIP6832.2) available from Gelest Inc. diluted 100 times with n-hexane used in Example 1, an ultra-thin elastomer sheet that was composed of the crosslinked silicone polymer having the number of monomer unit portions U between crosslinking points being 348 in mathematical formula (I) was prepared.

(Example 4-1 to Example 4-6)

In Example 1, except for changing the blending amounts of the silicone gum material 110S-7S, the crosslinking agent HMS-301, and the platinum catalyst solution as shown in Table 4 so that U' in mathematical formula (II) was 348, a thin-film elastomer sheet was obtained by film-producing in the same manner as in Example 1. The film thickness of the resulting thin-film elastomer sheet was measured in the same manner as in Example 1, and the results are shown in Table 4.

[Table 4]

| | 110S-7 | HMS-301 | Platinum catalyst solution | Film thickness |
|---|---|---|---|---|
| Example 4-1 | 1.76 g | 19.62 mg | 66.5 μL | 0.097 μm |
| Example 4-2 | 2.11 | 23.52 | 79.8 | 0.180 |
| Example 4-3 | 2.46 | 27.4 | 93.1 | 0.470 |
| Example 4-4 | 2.82 | 31.38 | 106.4 | 0.619 |
| Example 4-5 | 3.17 | 35.34 | 119.7 | 1.323 |

(continued)

| | 110S-7 | HMS-301 | Platinum catalyst solution | Film thickness |
|---|---|---|---|---|
| Example 4-6 | 3.52 | 39.18 | 133.0 | 2.130 |

(Example 5)

1. Isolation of thin-film elastomer sheet

A 20 mm x 20 mm square was cut out from the center of a 40 mm x 40 mm square cut out from the carrier film (HUCB 100A (product name)) available from PANAC Co., Ltd. to create the frame-shaped plastic frame. After attaching the plastic frame to the thin-film sheet 18 on the sacrifice layer 16b of the transfer film 16 followed by peeling, the sacrifice layer 16b and the thin-film sheet 18 were peeled off from the base film 16a together with the plastic frame. Next, the sacrifice layer 16b and the thin-film sheet 18 together with the plastic frame were immersed in warm water of 40-50 °C for 30 min, and the sacrifice layer 16b was dissolved to isolate the thin-film sheet 18, and thus an thin-film elastomer sheet was obtained.

2. Tensile test of thin-film elastomer sheet

By using a tensile tester (available from Shimadzu Corporation; EZ-S-5N), a tensile test was performed at a tensile speed of 10 mm/min on the thin-film elastomer sheet obtained in each of Examples 1-4, and the maximum tensile strength and the elongation rate thereof at break were measured. The measurement was performed 5 times and the average value was used as the measured value, and the results are shown in Table 5.

[Table 5]

| | U | Maximum tensile strength (Mpa) | Elongation rate at break (%) |
|---|---|---|---|
| Example 1-1 | 2090 | 1.37 | 338 |
| Example 1-2 | | 1.10 | 375 |
| Example 1-3 | | 0.58 | 588 |
| Example 1-4 | | 0.46 | 630 |
| Example 1-5 | | 0.44 | 913 |
| Example 1-6 | | 0.49 | 895 |
| Example 2-1 | 1045 | 1.58 | 399 |
| Example 2-2 | | 0.85 | 499 |
| Example 2-3 | | 0.77 | 550 |
| Example 2-4 | | 0.70 | 524 |
| Example 2-5 | | 0.58 | 555 |
| Example 2-6 | | 0.52 | 571 |
| Example 3-1 | 523 | 1.50 | 295 |
| Example 3-2 | | 1.12 | 355 |
| Example 3-3 | | 1.11 | 418 |
| Example 3-4 | | 1.11 | 417 |
| Example 3-5 | | 0.99 | 477 |
| Example 3-6 | | 0.85 | 471 |

(continued)

| | U | Maximum tensile strength (Mpa) | Elongation rate at break (%) |
|---|---|---|---|
| Example 4-1 | 348 | 1.92 | 185 |
| Example 4-2 | | 1.55 | 286 |
| Example 4-3 | | 1.38 | 326 |
| Example 4-4 | | 1.21 | 361 |
| Example 4-5 | | 1.26 | 341 |
| Example 4-6 | | 1.29 | 353 |

(Comparative example 1)

By using the silicone gum material 110S-7S, the crosslinking agent HMS-301, and the platinum catalyst solution of the platinum catalyst (SIP6832.2) available from Gelest Inc. diluted 100 times with n-hexane used in Example 1, an ultra-thin elastomer sheet that was composed of the crosslinked silicone polymer having the number of monomer unit portions U being 76 in mathematical formula (I) was prepared.

In Example 1, except for changing the silicone gum material 110S-7S to 3.52 g, the crosslinking agent HMS-301 to 142.35 mg, and the platinum catalyst solution to 66.5 μL so that U' in mathematical formula (II) was 76, a thin-film elastomer sheet was obtained by film-producing in the same manner as in Example 1. However, the resulting thin-film elastomer sheet was not strong enough to stand alone, so the film thickness and strength/elongation could not be measured.

(Comparative example 2)

By using the silicone gum material 110S-7S, the crosslinking agent HMS-301, and the platinum catalyst solution of the platinum catalyst (SIP6832.2) available from Gelest Inc. diluted 100 times with n-hexane used in Example 1, an ultra-thin elastomer sheet that was composed of the crosslinked silicone polymer having the number of monomer unit portions U being 28 in mathematical formula (I) was prepared.

In Example 1, except for changing the silicone gum material 110S-7S to 3.52 g, the crosslinking agent HMS-301 to 444.04 mg, and the platinum catalyst solution to 66.5 μL so that U' in mathematical formula (II) was 28, a thin-film elastomer sheet was obtained by film-producing in the same manner as in Example 1. However, the resulting thin-film elastomer sheet was not strong enough to stand alone, so the film thickness and strength/elongation could not be measured.

From the maximum strength and the elongation rate thereof at break of each of the thin-film elastomer sheet obtained in Example 5, it can be seen that each of the thin-film elastomer sheet is a standing-alone sheet with sufficient elongation rate thereof. The relationship between the elongation rate thereof at break of each of the thin-film elastomer sheet obtained in Example 5 and the thickness of each of the thin-film elastomer sheet obtained in Examples 1-4 is shown in Fig. 2. Clearly shown in Fig.2, the larger the number of monomer unit portions U between crosslinking points of the crosslinked silicone polymer in mathematical formula (I), that is, the more the number of uncrosslinked monomer unit portions in the crosslinked silicone polymer, the more the elongation rate thereof at break of the thin-film elastomer sheet. However, as is clear from Table 5, the larger U is, the lower the strength of the thin-film elastomer sheet and the lower the standing-alone properties. In addition, clearly shown in Comparative examples 1 and 2, when the number of monomer unit portions U between crosslinking points of the crosslinked silicone polymer is less than 348 in mathematical formula (I), that is, as the number of uncrosslinked monomer unit portions in the crosslinked silicone polymer decreases, stretchability becomes insufficient and hence it becomes impossible to stand alone. In this regard, the thin-film elastomer sheet according to the present invention having U of 348-2090 is the thin-film elastomer sheet with a balance of strength and stretchability, and hence with sufficient standing-alone properties and stretchability.

Industrial Applicability

The thin-film elastomer sheet of the present invention can be used for medical and sports dressing films, wearable device substrates, and cell lung and lobar devices.

Explanation of Letters or Numerals

Numerals mean as follows. 10: gravure roll, 12: transfer roller, 14: blade, 16: transfer film, 16a: base film, 16b: sacrifice layer, 18: thin-film sheet.

## Claims

1. An ultra-thin elastomer sheet being an ultra-thin sheet, which has a maximum film thickness of 3 μm and is composed of a crosslinked silicone polymer in which a silicone polymer configured from a plurality of unit portions having reactive organic groups and a plurality of unit portions not having reactive organic groups is crosslinked by a crosslinking agent having a reaction group that reacts with the reactive organic groups,

   the crosslinked silicone polymer is defined by the following mathematical formula (I)
   [mathematical expression 1]

   $$U = (Um + Un) / Ua \cdots\cdots (I)$$

   where, in numerical formula (I), U is a number of monomer unit portions between crosslinking points of the crosslinked silicone polymer, Um is a number of monomer unit portions of the silicone polymer that do not have reactive organic groups, Un is a number of monomer unit portions of the silicone polymer that have reactive organic groups, and Ua is a number of reaction groups of the crosslinking agent used in crosslinking and
   the number of monomer unit portions between crosslinking points of the crosslinked silicone polymer is 348-2090.

2. The ultra-thin elastomer sheet according to claim 1, wherein the silicone polymer has the reactive organic groups on side chains of a linear silicone polymer.

3. The ultra-thin elastomer sheet according to claim 1 or 2, wherein the organic reactive groups are vinyl groups.

4. The ultra-thin elastomer sheet according to any one of claims 1-3, wherein the silicone polymer is a polydimethylsiloxane polymer represented by the following chemical formula (1)

   [chemical expression 1]

   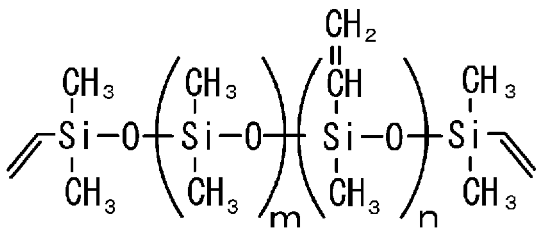
   ……… (1)

   wherein, in the chemical formula (I), m is 5828-10727, and n is 28-274.

5. The ultra-thin elastomer sheet according to any one of claims 1-4, wherein the crosslinking agent is a silicone compound which has a lower molecular weight than that of the silicone polymer and also has reaction groups that react with the reactive organic groups.

6. The ultra-thin elastomer sheet according to any one of claims 1-5, wherein the crosslinking agent is a linear silicone compound which has a lower molecular weight than that of the silicone polymer, and has reaction groups on side chains that react with the reactive organic groups.

7. The ultra-thin elastomer sheet according to any one of claims 1-6, wherein reaction groups of the crosslinking agent are hydrosilyl groups.

8. The ultra-thin elastomer sheet according to any one of claims 1-7, wherein the crosslinking agent is a silicone

compound represented by the following chemical formula (2)

[chemical expression 2]

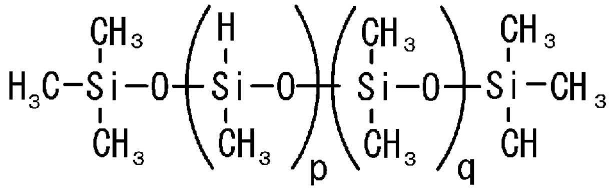 ......... (2)

wherein, in the chemical formula (2), p is 6-9 and q is 16-19.

**9.** The ultra-thin elastomer sheet according to any one of claims 1-8, wherein an elongation rate thereof is at least 150%.

**10.** A method for manufacturing an ultra-thin elastomer sheet comprising:

preparing a silicone polymer configured from a plurality of unit portions having reactive organic groups and a plurality of unit portions not having reactive organic groups, and a crosslinking agent having units including reaction groups that reacts the reactive organic groups so that a number of unit portions that do not react the reaction groups of the crosslinking agent among the silicone polymer which defined by the following mathematical formula (II)
[mathematical expression 1]

$$U' = (U'm + U'n) / U'a \cdots\cdots (II)$$

wherein, in mathematical formula (II), U' is a number of monomer unit portions that do not react reaction groups of the crosslinking agent in silicone polymer, U'm is a number of monomer unit portions that do not have reactive organic groups of silicone polymer, U'n is a number of monomer unit portions that have reactive organic groups of silicone polymer, and U'a is a number of reaction groups of the crosslinking agent, is 348-2090,
then, producing a crosslinked silicone polymer through dissolving the silicone polymer and the crosslinking agent in a solvent, subsequently adding a catalyst and reacting the reactive organic groups and the reaction groups of the crosslinking agent, and
film-producing a thin film sheet having a maximum film thickness of 3 μm from the crosslinked silicone polymer.

**11.** The method for manufacturing the ultra-thin elastomer sheet according to claim 10, wherein the silicone polymer, which has the reactive organic group on side chains of a linear silicone polymer, is used.

**12.** The method for manufacturing the ultra-thin elastomer sheet according to claim 10 or 11, wherein the organic reactive groups are vinyl groups.

**13.** The method for manufacturing the ultra-thin elastomer sheet according to any one of claims 10-12, wherein the silicone polymer, which is a polydimethylsiloxane polymer represented by the following chemical formula (1)

[chemical expression 1]

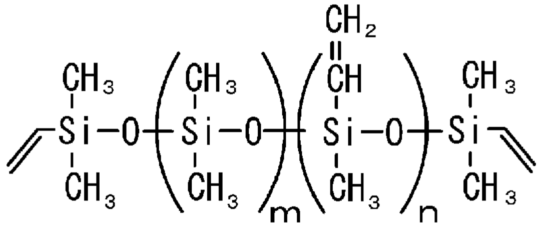 ......... (1)

wherein, in the chemical formula (I), m is 5828-10727, and n is 28-274, is used.

**14.** The method for manufacturing the ultra-thin elastomer sheet according to any one of claims 10-13, wherein a silicone compound as the crosslinking agent, which has a lower molecular weight than that of the silicone polymer, and has reaction groups that react the reactive organic groups, is used.

**15.** The method for manufacturing the ultra-thin elastomer sheet according to any one of claims 10-14, wherein a linear silicone compound as the crosslinking agent, which has a lower molecular weight than that of the silicone polymer, and has reaction groups on side chains that react the reactive organic groups, is used.

**16.** The method for manufacturing the ultra-thin elastomer sheet according to any one of claims 10-15, wherein reactive groups of the crosslinking agent are hydrosilyl groups.

**17.** The method for manufacturing the ultra-thin elastomer sheet according to any one of claims 10-16, wherein a silicone compound as the crosslinking agent, which is represented by the following chemical formula (4)

[chemical expression 4]

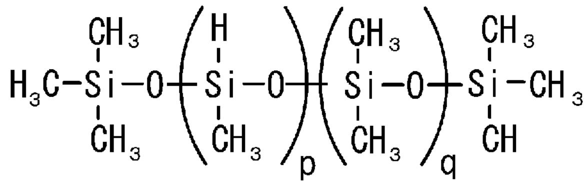 ········· (4)

wherein, in the chemical formula (4), p is 6-9 and q is 16-19, is used.

**18.** The method for manufacturing the ultra-thin elastomer sheet according to any one of claims 10-17, wherein a silicone solution, which is dissolved with the silicone polymer, the crosslinking agent and the catalyst in the solvent, is applied with a prescribed thickness onto a laminated sacrifice layer on one side of a base film while being heated and cured to become a thin sheet having a maximum film thickness of 3 μm, and then the sacrifice layer is removed to isolate the ultra-thin sheet from the base sheet.

*Fig.1*

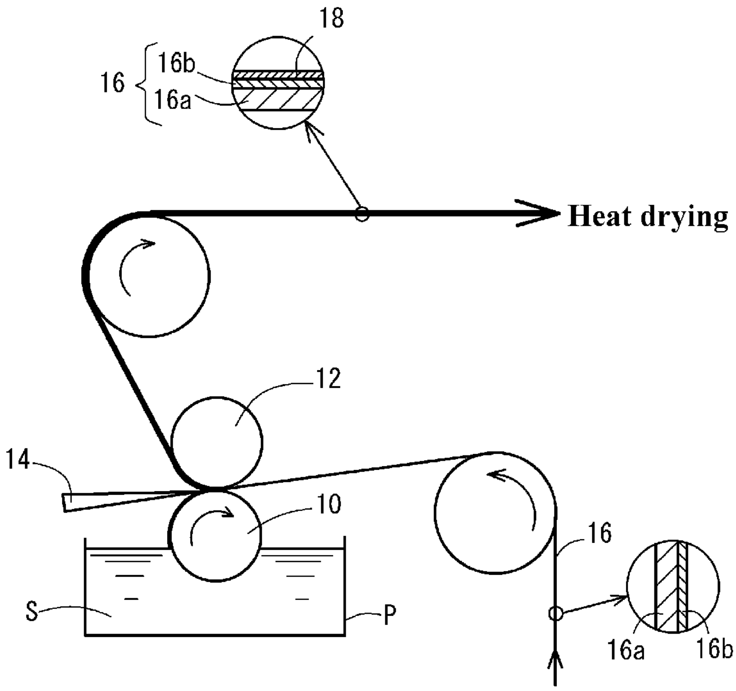
18
16
16b
16a
Heat drying
12
14
10
16
S
P
16a
16b

*Fig.2*

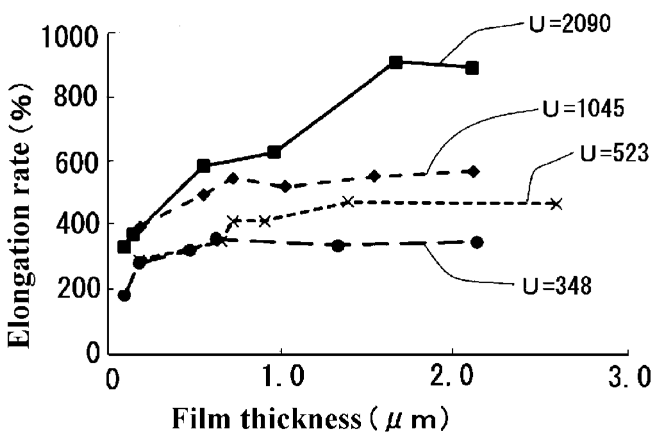
U=2090
U=1045
U=523
U=348
1000
800
600
400
200
0
Elongation rate (%)
0
1.0
2.0
3.0
Film thickness (μm)

## INTERNATIONAL SEARCH REPORT

International application No.
**PCT/JP2021/039581**

**A. CLASSIFICATION OF SUBJECT MATTER**

***C08L 83/05***(2006.01)i; ***C08L 83/07***(2006.01)i; ***C08J 5/18***(2006.01)i
FI: C08L83/07; C08L83/05; C08J5/18 CFH

According to International Patent Classification (IPC) or to both national classification and IPC

**B. FIELDS SEARCHED**

Minimum documentation searched (classification system followed by classification symbols)

C08L83/05; C08L83/07; C08J5/18

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 4-89866 A (SHIN ETSU CHEM. CO., LTD.) 24 March 1992 (1992-03-24) claims, page 2, lower right column, lines 3-7, page 2, lower right column, lines 11-18, page 4, upper right column, line 6 to lower left column, line 1, page 4, lower left column, compounds in the fourth row from the bottom, page 5, upper right column, lines 4-15, page 6, upper right column, lines 9-16, example 2 | 1-3, 5-12, 14-18 |
| A | | 4, 13 |
| A | JP 11-268194 A (TEIJIN LTD.) 05 October 1999 (1999-10-05) | 1-18 |
| A | JP 7-199478 A (KONICA CORP.) 04 August 1995 (1995-08-04) | 1-18 |
| A | JP 2008-13760 A (INOAC CORP.) 24 January 2008 (2008-01-24) | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 December 2021** | **21 December 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/039581**

| Patent document cited in search report | Publication date (day/month/year) | Patent family member(s) | Publication date (day/month/year) |
|---|---|---|---|
| JP 4-89866 A | 24 March 1992 | US 5239034 A<br>claims, column 2, lines 43-46, column 2, lines 49-58, column 5, lines 29-45, column 5, compounds in the third row from the bottom, column 6, line 64 to column 7, line 11, column 8, lines 35-46, example 2<br>EP 469927 A2 | |
| JP 11-268194 A | 05 October 1999 | (Family: none) | |
| JP 7-199478 A | 04 August 1995 | (Family: none) | |
| JP 2008-13760 A | 24 January 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017188214 A